# EUROPÄISCHE PATENTSCHRIFT

(11) **EP 2 328 004 B1**
(45) Veröffentlichungstag und Bekanntmachung des Hinweises auf die Patenterteilung: **11.09.2013**
(21) Anmeldenummer: 10014809.7
(22) Anmeldetag: 20.11.2010
(51) Int. Cl.: G02B 6/42, G02B 6/24, G02B 6/26, G02B 6/14

(54) **System aus einem optischen Verbinder und mehreren mit demselben verbundenen Lichtwellenleiterfasern**
System comprising an optical connector and multiple fibre optic cables connected with same
Système constitué d'un connecteur optique et de plusieurs fibres conductrices d'ondes lumineuses reliées à celui-ci

(30) Priorität: 30.11.2009 DE 202009016194 U
(43) Veröffentlichungstag der Anmeldung: 01.06.2011
(73) Patentinhaber: CCS Technology, Inc., Wilmington, DE 19803 (US)
(72) Erfinder: Dabrowski, Lukasz, Krasnik 23-210 (PL); Zamzow, Bert, Dr.-Ing., 82131 Gauting-Stockdorf (DE); Bachmann, Klaus, 34376 Immenhausen (DE); Strunck, Sven, 13156 Berlin (DE)
(74) Vertreter: Sturm, Christoph

(56) Entgegenhaltungen:
- DE-A1-102005 010 344
- US-A- 5 684 912
- US-A1- 2005 053 350

## Beschreibung

Die Erfindung betrifft ein System aus einem optischen Verbinder und mehreren mit dem optischen Verbinder verbundenen Lichtwellenleiterfasern nach dem Oberbegriff des Anspruchs 1 bzw. 2.

Beim Aufbau von Lichtwellenleiterkabelnetzwerken ist es erforderlich, erste Lichtwellenleiterfasern, die mit einem Sender oder einer Signalquelle verbunden sind, mit zweiten Lichtwellenleiterfasern, die mit einem Empfänger verbunden sind, zu koppeln, wobei hierzu optische Verbinder zum Einsatz kommen. Bei den optischen Verbindern kann es sich zum Beispiel um Splitter, zum Beispiel um PLC (Planar Lightwave Circuit) Splitter, oder auch um FBT (Fused Biconic Taper) Koppler handeln.

Die mit dem Sender bzw. der Signalquelle verbundenen, ersten Lichtwellenleiter sind dabei an einen Eingang des optischen Verbinders angeschlossen. Die mit den Empfängern verbundenen, zweiten Lichtwellenleiter sind dabei an einen Ausgang des optischen Verbinders angeschlossen. Dann, wenn zweite Lichtwellenleiterfasern zwar an den Ausgang des optischen Verbinders angeschlossen jedoch nicht mit einem Empfänger verbunden sind, kann dies negative Auswirkungen auf den Betrieb des Senders bzw. der Signalquelle haben und für Instabilitäten im Lichtwellenleiternetzwerk sorgen. Eine ähnliche Situation stellt sich dann ein, wenn erste Lichtwellenleiterfasern zwar an den Eingang des optischen Verbinders angeschlossen jedoch nicht mit einem Sender bzw. einer Signalquelle verbunden sind. Dies ist von Nachteil.

Hiervon ausgehend liegt der vorliegenden Erfindung das Problem zu Grunde, ein neuartiges System aus einem optischen Verbinder und mehreren mit dem optischen Verbinder verbundenen Lichtwellenleiterfasern zu schaffen.

Dieses Problem wird durch ein System gemäß Anspruch 1 gelöst. Hiernach ist solchen zweiten Lichtwellenleiterfasern, die zwar an einen Ausgang des optischen Verbinders angeschlossen jedoch nicht mit einem Empfänger verbunden sind, ein Rückflussdämpfungselement zugeordnet.

Dieses Problem wird weiterhin durch ein System gemäß Anspruch 2 gelöst. Hiernach ist solchen ersten Lichtwellenleiterfasern, die zwar an den Eingang des optischen Verbinders angeschlossen jedoch nicht mit einem Sender verbunden sind, ein Rückflussdämpfungselement zugeordnet.

Mit der hier vorliegenden Erfindung wird vorgeschlagen, solchen Lichtwellenleiterfasern, die zwar an einen Ausgang oder Eingang des optischen Verbinders angeschlossen jedoch nicht mit einem Empfänger oder einem Sender verbunden sind, ein Rückflussdämpfungselement zuzuordnen.

Mit einem solchen Rückflussdämpfungselement können eine Reflektion bzw. ein Rückfluss von optischen Signalen von solchen Lichtwellenleiterfasern, die zwar an den Ausgang oder Eingang des optischen Verbinders angeschlossen jedoch nicht mit einem Empfänger oder einem Sender verbunden sind, minimiert werden. Hierdurch können Beeinträchtigungen im Betrieb des Senders bzw. der Signalquelle oder des Empfängers und Instabilitäten im Lichtwellenleiternetzwerk vermieden werden.

Bevorzugte Weiterbildungen der Erfindung ergeben sich aus den Unteransprüchen und der nachfolgenden Beschreibung. Ausführungsbeispiele werden anhand der Zeichnung näher erläutert. In der Zeichnung zeigt:
- Fig. 1:: ein erstes Vergleichsbeispiel eines Systems aus einem optischen Verbinder und mehreren mit dem Verbinder verbundenen Lichtwellenleiterfasern zusammen mit einer Spleißkassette;
- Fig. 2:: ein zweites Vergleichsbeispiel eines Systems aus einem optischen Verbinder und mehreren mit dem Verbinder verbundenen Lichtwellenleiterfasern zusammen mit einer Spleißkassette;
- Fig. 3:: ein Detail des Systems der Fig. 2;
- Fig. 4:: das Detail der Fig. 3 in einer zweiten Ansicht;
- Fig. 5:: ein drittes Vergleichsbeispiel eines Systems aus einem optischen Verbinder und mehreren mit dem Verbinder verbundenen Lichtwellenleiterfasern zusammen mit einer Spleißkassette;
- Fig. 6:: ein Ausführungsbeispiel eines erfindungsgemäßen Systems aus einem optischen Verbinder und mehreren mit dem Verbinder verbundenen Lichtwellenleiterfasern zusammen mit einer Spleißkassette; und
- Fig. 7:: ein Detail des Systems der Fig. 6.

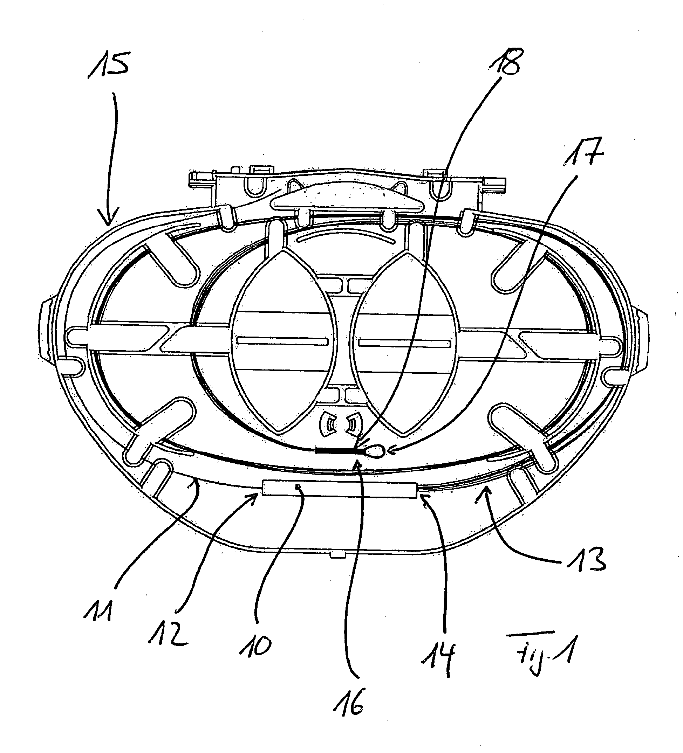

Fig. 1 zeigt ein erstes Vergleichsbeispiel eines Systems aus einem optischen Verbinder 10 und mehreren mit dem optischen Verbinder 10 verbundenen Lichtwellenleiterfasern, nämlich einer ersten Lichtwellenleiterfaser 11, die an einen Eingang 12 des optischen Verbinders angeschlossen und mit einem Sender bzw. Signalquelle verbunden ist, und mehreren zweiten Lichtwellenleiterfasern 13, die an einen Ausgang 14 des optischen Verbinders angeschlossen sind, wobei im gezeigten Vergleichsbeispiel der Fig. 1 keine der zweiten Lichtwellenleiterfasern 13 mit einem Empfänger verbunden ist. Im gezeigten Vergleichsbeispiel der Fig. 1 handelt es sich demnach um ein System, bei welchem an den optischen Verbinder 10 eine größere Anzahl an zweiten Lichtwellenleiterfasern 13 angeschlossen ist als erste Lichtwellenleiterfasern 11.

Bei dem optischen Verbinder 10 handelt es sich in diesem Fall typischerweise um einen optischen Splitter, insbesondere einen PLC (Planar Lightwave Circuit) Splitter. Bereits an dieser Stelle sei darauf hingewiesen, dass die Erfindung jedoch nicht auf diesen Anwendungsfall beschränkt ist.

Vielmehr können beim erfindungsgemäßen System auch andere optische Verbinder zum Einsatz kommen, so zum Beispiel FBT (Fused Biconic Taper) Koppler oder andere Verbinder, und zwar auch solche, bei welchen die Anzahl der an den Eingang des optischen Verbinders angeschlossenen, ersten Lichtwellenleiterfasern der Anzahl der an den Ausgang des optischen Verbinders angeschlossenen, zweiten Lichtwellenleiterfasern entspricht.

In Fig. 1 ist das System zusammen mit einer Spleißkassette 15 gezeigt, in welcher dasselbe aufgenommen ist. Das System ist jedoch nicht auf diesen Anwendungsfall beschränkt, vielmehr kann das System auch in anderen Einrichtungen zur Handhabung von Lichtwellenleiterfasern, zum Beispiel in einem Patchpanel, zum Einsatz kommen.

Im Sinne der hier vorliegenden Erfindung ist jedem der Lichtwellenleiterfasern 13, die zwar an den Ausgang 14 des optischen Verbinders 10 angeschlossen jedoch nicht mit einem Empfänger verbunden sind, ein Rückflussdämpfungselement 16 zugeordnet.

Das Rückflussdämpfungselement 16 ist im Vergleichsbeispiel der Fig. 1 dadurch gebildet, dass die zweiten Lichtwellenleiterfasern 13, die zwar an einen Ausgang des optischen Verbinders 10 angeschlossen jedoch nicht mit einem Empfänger verbunden sind, unter Erhöhung der Dämpfung in den zweiten Lichtwellenleiterfasern 13 zu einer Schlaufe 17 gebogen sind, wobei hierbei jede dieser zweiten Lichtwellenleiterfasern 13 einfach bzw. einmal zu der Schlaufe 17 gebogen ist.

Der Biegeradius der Schlaufe 17 ist dabei derart gewählt, dass die Dämpfung dieser zweiten Lichtwellenleiterfasern 13 derart erhöht wird, dass eine Reflektion in den Verbinder 10 und damit in die ersten Lichtwellenleiterfasern 11 hinein auf ein absolutes Minimum reduziert wird.

Um ein Auflösen oder eine Biegeradiusveränderung im Bereich der Schlaufe 17 zu vermeiden, ist diesen zweiten Lichtwellenleiterfasern 13 benachbart zur Schlaufe 17 ein Fixierelement 18 zugeordnet, das zum Beispiel über ein Wärmeschrumpfelement bereitgestellt werden kann. Über ein dem Fixierelement 18 zugeordnetes Klebeband kann eine Fixierung der Schlaufe 17 an der Spleißkassette 15 erfolgen.

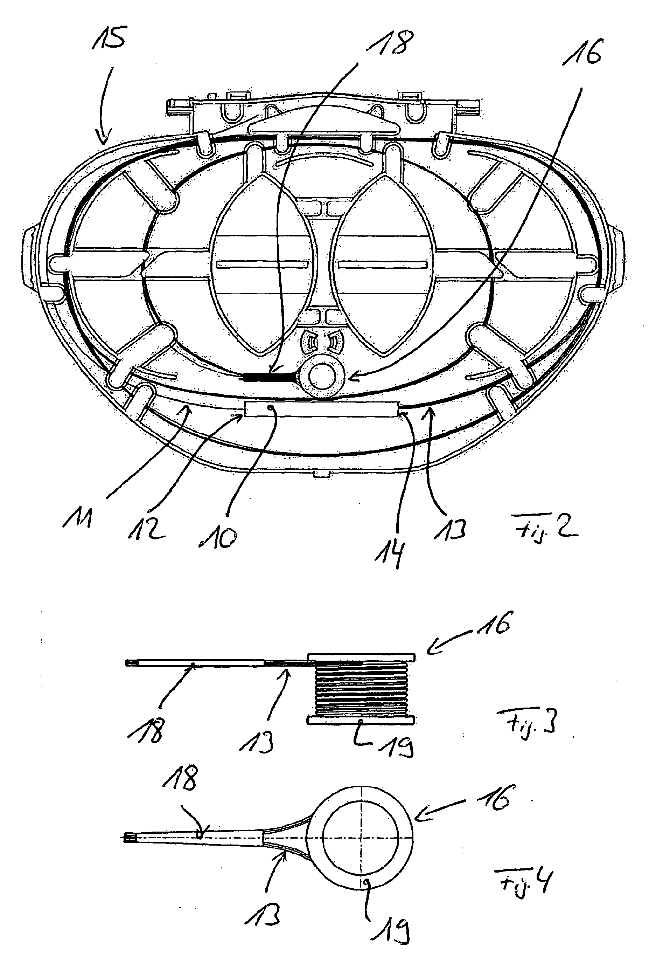

Fig. 2 bis 4 zeigen ein zweites Vergleichsbeispiel eines Systems aus einem optischen Verbinder 10, einer ersten Lichtwellenleiterfaser 11 und mehreren zweiten Lichtwellenleiterfasern 13, wobei sich das Vergleichsbeispiel der Fig. 2 vom Vergleichsbeispiel der Fig. 1 durch die Ausgestaltung des den zweiten Lichtwellenleiterfasern 13 zugeordneten Rückflussdämpfungselements 16 unterscheidet.

So ist im Vergleichsbeispiel der Fig. 2 bis 4 das Rückflussdämpfungselement 16 dadurch ausgebildet, dass die zweiten Lichtwellenleiterfasern 13, die zwar an den Ausgang 14 des optischer Verbinders 10 angeschlossen jedoch nicht mit einem Empfänger verbunden sind, unter Erhöhung der Dämpfung in den Lichtwellenleiterfasern 13 um ein trommelartiges Führungselement 19 mehrfach gewickelt sind.

Der Biegeradius der Lichtwellenleiterfasern 13 im Bereich des trommelartigen Führungselements 19 ist derart gewählt, dass die Dämpfung dieser zweiten Lichtwellenleiterfasern 13 derart erhöht wird, dass eine Reflektion in den Verbinder 10 und damit in die ersten Lichtwellenleiterfasern 11 hinein auf ein absolutes Minimum reduziert wird.

Den mehrfach um das trommelartige Führungselement 19 gewickelten Lichtwellenleiterfasern 13 ist benachbart zu dem trommelartigen Führungselement 19 ein vorzugsweise als Wärmeschrumpfelement ausgebildetes Fixierelement 18 zugeordnet ist, das ein unerwünschtes Abwickeln der zweiten Lichtwellenleiterfasern 13 von dem trommelartigen Führungselement 19 verhindert.

Das trommelartige Führungselement 19 kann zum Beispiel mithilfe eines Klebebands auf der Spleißkassette 15 montiert sein.

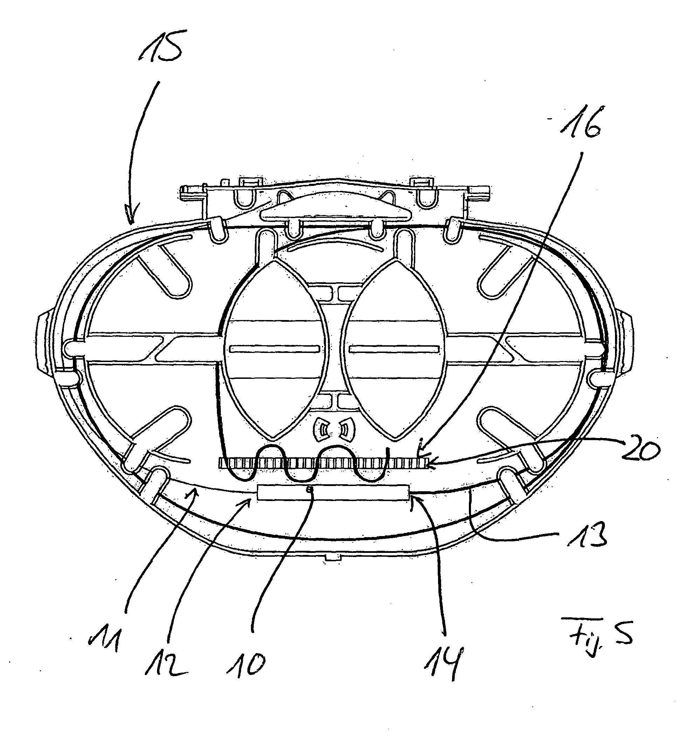

Ein drittes Vergleichsbeispiel eines Systems zeigt Fig. 5. In Fig. 5 ist das den zweiten Lichtwellenleiterfasern 13 zugeordnete Rückflussdämpfungselement 16 dadurch gebildet, dass die zweiten Lichtwellenleiterfasern 13, die zwar an den Ausgang 14 des optischen Verteiler 10 angeschlossen jedoch nicht mit einem Empfänger verbunden sind, unter Erhöhung der Dämpfung in den Lichtwellenleiterfasern 13 wellenartig gebogen sind, nämlich gemäß Fig. 5 vorzugsweise mehrfach an einem kammartigen Führungselement 20.

Den obigen Vergleichsbeispielen der Fig. 1 bis 5 ist gemeinsam, dass eine Reflektion von den zweiten Lichtwellenleiterfasern 13, die zwar an den Ausgang 14 des jeweiligen optischen Verbinders 10 angeschlossen, jedoch nicht mit einem Empfänger verbunden sind, durch eine Erhöhung der Dämpfung in den jeweiligen zweiten Lichtwellenleiterfasern 13 bewerkstelligt wird. Hierzu werden die zweiten Lichtwellenleiterfasern 13 jeweils mit einem Radius gebogen bzw. gewickelt, der die Dämpfung in den Lichtwellenleiterfasern 13 erhöht.

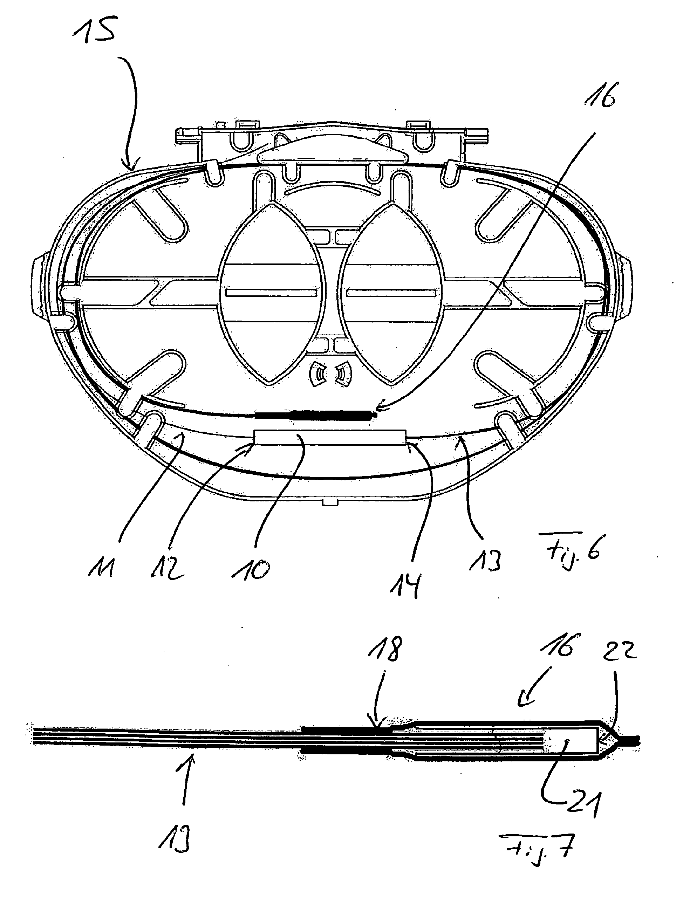

Im Unterschied hierzu zeigen Fig. 6 und 7 ein Ausführungsbeispiel der Erfindung, in welchem das Rückflussdämpfungselement 16 dadurch gebildet ist, dass die zweiten Lichtwellenleiterfasern 13, die zwar an den Ausgang 14 des optischen Verbinders 10 angeschlossen jedoch nicht mit einem Empfänger verbunden sind, an freien Enden von einem gelartigen Werkstoff 21 umhüllt sind, der in einer Umhüllung 22 aufgenommen ist.

Der gelartige Werkstoff 21 verfügt dabei über einen optischen Brechungsindex in der Größenordnung der Lichtleitkerne der jeweiligen zweiten Lichtwellenleiterfasern 13. Hierdurch wird von denselben emittiertes Licht in dem gelartigen Werkstoff 21 gebunden und es besteht eine minimierte Gefahr der Reflektion in Richtung auf den Verbinder 10 und damit in Richtung auf die oder jede erste Lichtwellenleiterfaser 11.

Gemäß Fig. 7 ist die Umhüllung 22 ihrerseits von einem als Wärmeschrumpfelement ausgebildeten Fixierelement 18 umgeben, welches die Umhüllung 22 und damit den gelartigen Werkstoff 21 in Position hält, sodass der gelartige Werkstoff 21 die Enden der zweiten Lichtwellenleiterfasern 13, die nicht mit einem Empfänger verbunden sind, dauerhaft umgibt. Über ein Klebeband kann das Rückflussdämpfungselement 16 der Fig. 6 und 7 mit der Spleißkassette 15 verbunden sein.

Dann, wenn eine der zweiten Lichtwellenleiterfasern 13, die in den gezeigten Ausführungsbeispielen am jeweiligen Rückflussdämpfungselement 16 geführt ist, an einen Empfänger angeschlossen werden soll, kann die jeweilige zweite Lichtwellenleiterfaser 13 vom jeweiligen Rückflussdämpfungselement 16 gelöst und an einen Empfänger angeschlossen werden.

Dann, wenn sämtlichen zweiten Lichtwellenleiterfasern 13 an einen Empfänger angeschlossen sind, kann das jeweilige Rückflussdämpfungselement 16 vollständig entfernt werden.

Unter Bezugnahme auf Fig. 6 bis 7 wurde die Erfindung für den Fall beschrieben, dass zweiten Lichtwellenleiterfasern 13, die zwar an den Ausgang 14 des optischen Verbinders 10 angeschlossen jedoch nicht mit einem Empfänger verbunden sind, ein Rückflussdämpfungselement 16 zugeordnet ist. Die Erfindung kann analog auch an solchen ersten Lichtwellenleiterfasern 11 zur Anwendung kommen, die zwar an den Eingang 12 des optischen Verbinders 10 angeschlossen jedoch nicht mit einem Sender verbunden sind.

### Bezugszeichenliste

- 10: Verbinder
- 11: Lichtwellenleiterfaser
- 12: Eingang
- 13: Lichtwellenleiterfaser
- 14: Ausgang
- 15: Spleißkassette
- 16: Rückflussdämpfungselement
- 17: Schlaufe
- 18: Fixierelement
- 19: trommelartiges Führungselement
- 20: kammartiges Führungselement
- 21: gelartiger Werkstoff
- 22: Umhüllung

## Patentansprüche

1. System aus einem optischen Verbinder (10) und mehreren mit dem optischen Verbinder (10) verbundenen Lichtwellenleiterfasern, nämlich mindestens einer ersten Lichtwellenleiterfaser (11), die an einen Eingang (12) des optischen Verbinders (10) angeschlossen und vorzugsweise mit einem Sender verbunden ist, und mehreren zweiten Lichtwellenleiterfasern (13), die an einen Ausgang (14) des optischen Verbinders (10) angeschlossen und vorzugsweise mit einem Empfänger verbunden sind, wobei solchen zweiten Lichtwellenleiterfasern (13), die zwar an den Ausgang des optischen Verbinders (10) angeschlossen jedoch nicht mit einem Empfänger verbunden sind, ein Rückflussdämpfungselement (16) zugeordnet ist, **dadurch gekennzeichnet, dass** das Rückflussdämpfungselement (16) dadurch gebildet ist, dass die zweiten Lichtwellenleiterfasern (13), die zwar an den Ausgang des optischen Verbinders (10) angeschlossen jedoch nicht mit einem Empfänger verbunden sind, an freien Enden von einem gelartigen Werkstoff (21) umgeben sind, der einen optischen Brechungsindex in der Größenordung eines Lichtleitkerns der zweiten Lichtwellenleiterfasem aufweist.

2. System aus einem optischen Verbinder (10) und mehreren mit dem optischen Verbinder (10) verbundenen Lichtwellenleiterfasern, nämlich mindestens einer ersten Lichtwellenleiterfaser (11), die an einen Eingang (12) des optischen Verbinders (10) angeschlossen und vorzugsweise mit einem Sender verbunden ist, und mehreren zweiten Lichtwellenleiterfasern (13), die an einen Ausgang (14) des optischen Verbinders (10) angeschlossen und vorzugsweise mit einem Empfänger verbunden sind, wobei solchen ersten Lichtwellenleiterfasern (11), die zwar an den Eingang des optischen Verbinders (10) angeschlossen jedoch nicht mit einem Sender verbunden sind, ein Rückflussdämpfungselement (16) zugeordnet ist, **dadurch gekennzeichnet, dass** das Rückflussdämpfungselement (16) dadurch gebildet ist, dass die ersten Lichtwellenleiterfasern (11), die zwar an den Eingang des optischen Verbinders (10) angeschlossen jedoch nicht mit einem Sender verbunden sind, an freien Enden von einem gelartigen Werkstoff (21) umgeben sind, der einen optischen Brechungsindex in der Größenordung eines Lichtleitkerns der ersten Lichtwellenleiterfasern (11) aufweist.

3. System nach Anspruch 1 oder 2, **dadurch gekennzeichnet, dass** der gelartige Werkstoff (21) in einer Umhüllung (22) aufgenommen ist, welche die freien Enden der jeweiligen Lichtwellenleiterfasern (11, 13) umgibt.

4. System nach Anspruch 3, **dadurch gekennzeichnet, dass** die Umhüllung (22) von einem als Wärmeschrumpfelement ausgebildeten Fi- L xierelement (18) umgeben ist, welches die Umhüllung (22) und damit den gelartigen Werkstoff (21) in Position hält, sodass der gelartige Werkstoff (21) die Enden der jeweiligen Lichtwellenleiterfasern (11, 13) dauerhaft umgibt.

5. System nach einem der Ansprüche 1 bis 4, **dadurch gekennzeichnet, dass** der optische Verbinder (10) ein optischer Splitter ist, wobei die Anzahl der zweiten Lichtwellenleiterfasem (13) größer ist als die Anzahl der ersten Lichtwellenleiterfasern (11).

## Claims

1. System comprising an optical connector (10) and multiple optical fibre cables connected to the optical connector (10), specifically at least one first optical fibre cable (11), which is attached to an input (12) of the optical connector (10) and is preferably connected to a transmitter, and multiple second optical fibre cables (13), which are attached to an output (14) of the optical connector (10) and are preferably connected to a receiver, those second optical fibre cables (13) which, although they are attached to the output of the optical connector (10), are not connected to a receiver, being assigned a feedback damping element (16), **characterized in that** the feedback damping element (16) is formed **in that** the second optical fibre cables (13) which, although they are attached to the output of the optical connector (10), are not connected to a receiver, are surrounded at their free ends by a gel-like substance (21) which has an optical refractive index of the order of magnitude of an optical fibre core of the second optical fibre cables.

2. System comprising an optical connector (10) and multiple optical fibre cables connected to the optical connector (10), specifically at least one first optical fibre cable (11), which is attached to an input (12) of the optical connector (10) and is preferably connected to a transmitter, and multiple second optical fibre cables (13), which are attached to an output (14) of the optical connector (10) and are preferably connected to a receiver, those first optical fibre cables (11) which, although they are attached to the input of the optical connector (10), are not connected to a transmitter, being assigned a feedback damping element (16), **characterized in that** the feedback damping element (16) is formed **in that** the first optical fibre cables (11) which, although they are attached to the input of the optical connector (10), are not connected to a transmitter, are surrounded at free ends by a gel-like substance (21) which has an optical refractive index of the order of magnitude of an optical fibre core of the first optical fibre cables (11).

3. System according to Claim 1 or 2, **characterized in that** the gel-like substance (21) is accommodated in a sheath (22) which surrounds the free ends of the respective optical fibre cables (11, 13).

4. System according to Claim 3, **characterized in that** the sheath (22) is surrounded by a fixing element (18) formed as a heat-shrink element, which keeps the sheath (22) and therefore the gel-like substance (21) in position, so that the gel-like substance (21) permanently surrounds the ends of the respective optical fibre cables (11, 13).

5. System according to one of Claims 1 to 4, **characterized in that** the optical connector (10) is an optical splitter, the number of second optical fibre cables (13) being greater than the number of first optical fibre cables (11).

## Revendications

1. Système constitué d'un connecteur optique (10) et d'une pluralité de fibres optiques connectées au connecteur optique (10), à savoir au moins une première fibre optique (11), qui est reliée à une entrée (12) du connecteur optique (10) et qui est de préférence connectée à un émetteur, et une pluralité de secondes fibres optiques (13), qui sont reliées à une sortie (14) du connecteur optique (10) et qui sont de préférence connectées à un récepteur, un élément d'atténuation de flux de retour (16) étant associé auxdites secondes fibre optiques (13) qui, bien que reliées à une sortie du connecteur optique (10), ne sont cependant pas connectées à un récepteur, **caractérisé en ce que** l'élément d'atténuation de flux de retour (16) est conçu de telle manière que les secondes fibres optiques (13) qui, bien que reliées à la sortie du connecteur optique (10) ne sont cependant pas connectées à un récepteur, soient entourées, à une extrémité libre, d'un matériau de type gel (21) présentant un indice de réfraction optique du même ordre de grandeur qu'un coeur de guidage optique des secondes fibres optiques.

2. Système constitué d'un connecteur optique (10) et d'une pluralité de fibres optiques connectées au connecteur optique (10), à savoir au moins une première fibre optique (11), qui est reliée à une entrée (12) du connecteur optique (10) et qui est de préférence connectée à un émetteur, et une pluralité de secondes fibres optiques (13), qui sont reliées à une sortie (14) du connecteur optique (10) et qui sont de préférence connectées à un récepteur, un élément d'atténuation de flux de retour (16) étant associé auxdites premières fibre optiques (11) qui, bien que reliées à une entrée du connecteur optique (10), ne sont cependant pas connectées à un récepteur, **caractérisé en ce que** l'élément d'atténuation de flux de retour (16) est conçu de telle manière que les premières fibres optiques (11) qui, bien que reliées à l'entrée du connecteur optique (10) ne sont cependant pas connectées à un émetteur, soient entourées, à une extrémité libre, d'un matériau de type gel (21) présentant un indice de réfraction optique du même ordre de grandeur qu'un coeur de guidage optique des premières fibres optiques.

3. Système selon la revendication 1 ou 2, **caractérisé en ce que** le matériau de type gel (21) est logé dans une gaine (22) qui entoure les extrémités libres des fibres optiques respectives (11, 13).

4. Système selon la revendication 3, **caractérisé en ce que** la gaine (22) est entourée d'un élément de fixation (18) réalisé sous la forme d'un élément thermorétractable qui maintient en position la gaine (22) et par conséquent le matériau de type gel (21) afin que le matériau de type gel (21) entoure de manière permanente les extrémités des fibres optiques respectives (11, 13).

5. Système selon l'une quelconque des revendications 1 à 4, **caractérisé en ce que** le connecteur optique (10) est un séparateur optique, le nombre des secondes fibres optiques (13) étant supérieur au nombre des premières fibres optiques (11).
